# FASCICULE DE BREVET EUROPEEN

(11) **EP 3 530 108 B1**
(45) Date de publication et mention de la délivrance du brevet: **01.12.2021**
(21) Numéro de dépôt: 19158298.0
(22) Date de dépôt: 20.02.2019
(51) Int. Cl.: A01G 9/033

(54) **CAISSETTE DE POSE PRECULTIVÉE POUR LA VÉGÉTALISATION DE TOITURES, ENSEMBLE VÉGÉTAL INCLUANT AU MOINS DEUX CAISSETTES**
EINSETZKASSETTE MIT VORGEZOGENEN PFLANZEN ZUR BEGRÜNUNG VON DÄCHERN, PFLANZLICHE EINHEIT, DIE MINDESTENS ZWEI KASSETTEN UMFASST
PRECULTIVATED PLANTING BOX FOR ROOF PLANTING, PLANT COLLECTION INCLUDING AT LEAST TWO BOXES

(30) Priorité: 21.02.2018 FR 1870185; 02.01.2019 FR 1900005
(43) Date de publication de la demande: 28.08.2019
(73) Titulaire: Vertige International, 33150 Cenon (FR)
(72) Inventeur: DEMGUILHEM, Stéphane, 33360 Quinsac (FR)
(74) Mandataire: Aquinov

(56) Documents cités:
- EP-A1- 2 677 854
- WO-A1-2004/077931
- WO-A1-2010/040701
- US-A- 5 373 661
- US-A1- 2013 031 833
- US-B1- 6 178 690

## Description

L'invention concerne une caissette de pose pré cultivée pour la végétalisation de toitures selon la revendication 1.

La présente invention vise un ensemble végétal incluant au moins deux caissettes.

Dans le secteur de la végétalisation de toiture, les innovations sont nombreuses et proposent des dispositifs de pose nouveaux, qui prévoient des irrigations intégrées et de nouveaux moyens de pose. En effet, la végétalisation de toiture est couramment réalisée avec une couche de substrat dans laquelle est planté un couvert végétal, notamment du sedum. Cette couche végétalisée est généralement pré cultivée et se présente sous forme d'un tapis végétalisé, enroulé.

Ce tapis enroulé semble aisé à manutentionner jusque sur les toits et il paraît facile de dérouler ce tapis végétalisé sur les toitures après avoir disposé les éléments d'étanchéité et des éléments éventuels d'irrigation, nécessaires pour la bonne culture du couvert végétal. Si le déroulement des tapis de sédum semble aisé et pratique, le transport de ces tapis de substrat/couvert végétal est par contre plus contraignant.

En effet, les rouleaux de sedum sont des surfaces végétalisées qui sont structurées et qui se maintiennent mécaniquement par les racines du couvert végétal, ce qui permet leur enroulement pour obtenir des rouleaux, plus faciles à déplacer. Néanmoins, ces tapis de sedum enroulés sont fragiles et leur souplesse et le manque de rigidité ne permet pas une bonne tenue et une facilité de préhension pour le poseur. Le poids important de ces tapis végétalisés, enroulés, est également une contrainte forte pour les poseurs.

Ces tapis enroulés peuvent également subir des détériorations durant leur déplacement, dans le container ou le camion qui les transporte, l'enracinement ne garantissant pas une résistance mécanique toujours suffisante.

Pour faciliter le transport, la manipulation et la pose des tapis végétalisés sur les toitures, des caissettes pré cultivées ont donc été développées. Ces caissettes, contenant un couvert végétal pré cultivé, comportent une fond étanche intégrant des réserves d'eau servant de stockage durant les périodes de sécheresse. Ces caissettes récupèrent donc l'eau en période de pluie et peuvent fournir une possibilité d'irrigation pour les végétaux qu'elle contient, jusqu'à épuisement de la réserve d'eau. Ces caissettes peuvent être empilées pour faciliter leur stockage et leur transport. De plus, ces caisses sont facilement préhensibles, et peuvent donc être saisies et facilement positionnables côte à côte pour réaliser les surfaces végétalisées sur les toitures. Ce type de caissettes présente un certain nombre d'inconvénients. Les matières utilisées pour leur fabrication sont généralement des matières plastiques d'origine fossile qui n'ont pas possibilité de se biodégrader et qui restent donc à demeure sous la couche de végétalisation de la toiture.

De plus, la réserve d'eau des caissettes assure l'alimentation en eau des végétaux jusqu'à ce que les réserves de chaque caissette soient épuisées, ce qui peut s'avérer insuffisant durant les longues périodes de sécheresse, sans pluie intermédiaire.

Pour pallier ces inconvénients, il conviendrait de bénéficier d'une caissette apte à être alimentée par des tapis intégrant l'irrigation. Ces tapis d'irrigation, qui intègrent des tuyaux d'irrigation sont connus et sont posés sur l'étanchéité de la toiture et reçoivent le tapis végétalisé déroulé qui vient ensuite s'enraciner dans le tapis d'irrigation. On connaît de façon particulière le brevet FR 2 923 138 qui constitue un tapis particulièrement attractif. US 2013/031833 A1 divulgue la combinaison d'une caissette pré-cultivée avec un tapis d'irrigation, la caissette étant réalisée selon le préambule de la revendication 1.

La présente invention propose donc des caissettes biodégradables dépourvues de fonds étanches et de réserve d'eau pouvant être posés sur le tapis et qui laissant passer les racines du couvert végétal.

La présente invention propose aussi selon une variante, une cassette de pose à calage avec une géométrie propre aux caissettes biodégradables selon la présente invention pour permettre un empilement par emboîtement des caissettes de pose vides et par superposition des caissettes de pose intégrant le couvert végétal.

La présente invention propose aussi selon une variante, une cassette de pose à calage avec une géométrie propre aux caissettes biodégradables selon la présente invention pour permettre un empilement par emboîtement des caissettes de pose vides et par superposition des caissettes de pose intégrant le couvert végétal.

La caissette à calage selon la présente invention permet également un positionnement avec immobilisation par rapport aux autres caissettes, de façon à permettre une liaison dans le plan de pose et une retenue des caissettes sur des supports en pente.

La présente invention est maintenant décrite suivant un mode de réalisation principal, sans que celui-ci soit limitatif, ainsi que selon une variante particulière à calage, ceci en regard des dessins associés sur lesquels les différentes figures représentent:
[Fig. 1] représente une vue de face de la caissette de pose.
[Fig. 2] représente une vue de dessus de la caissette de pose.
[Fig. 3] représente une vue en coupe de la caissette de pose pré cultivée et posée sur un tapis d'irrigation avant extension des racines et avant dégradation.
[Fig. 4] représente une vue de face de la caissette de pose pré cultivée et posée sur un tapis d'irrigation après extension des racines et après dégradation.
[Fig. 5] représente une vue en perspective de la caissette de pose à calage vide, selon une variante de l'invention.
[Fig. 6] représente une vue de dessous de la caissette de pose de la figure 5.
[Fig. 7] représente une vue en perspective de dessous de la caissette de pose de la figure 5.
[Fig. 8] représente une vue en perspective de deux caissettes de pose de la figure 5, superposées avec couvert végétal en place.
[Fig. 9] représente une vue en élévation latérale des deux caissettes superposées.
[Fig. 10] représente une vue de dessus des deux caissettes accolées et calées.

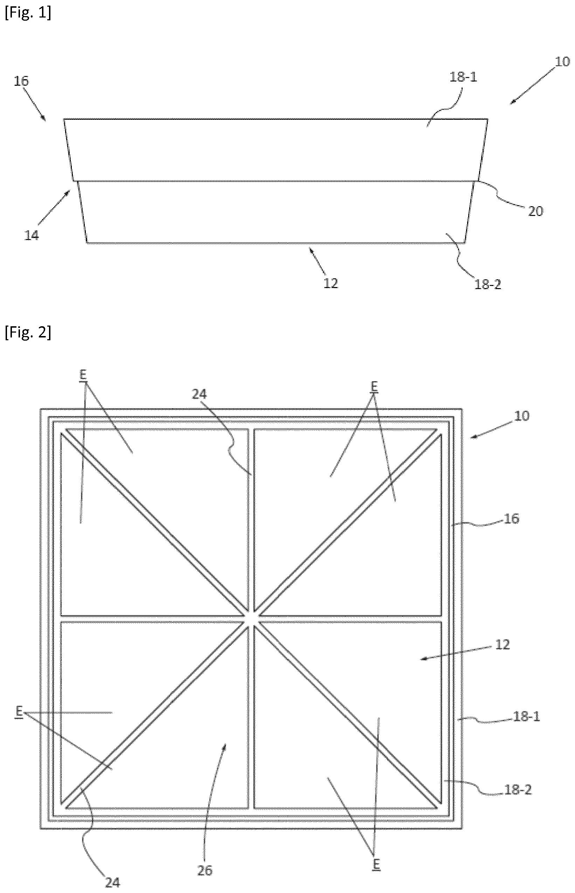

Les figures 1 et 2 représentent la caissette de pose dépourvue de couvert végétal, c'est-à-dire vide. Cette caissette comporte des moyens structurants 10, des moyens supports 12 et des moyens de superposition 14.

Les moyens structurants 10 sont réalisés pas un bord 16 périphérique. Ce bord 16 périphérique comporte deux surfaces périphériques 18, une surface périphérique supérieure 18-1 et inférieure 18-2 reliés par un décrochement 20 placé entre la surface périphérique supérieure 18-1 et la surface périphérique inférieure 18-2. Ledit décrochement 20 forme les moyens de superposition 14. Les surfaces périphériques 18-1 et 18-2 formant le bord 16 sont placées de manière légèrement inclinée et suivant des plans respectifs parallèles. En effet, les surfaces périphériques 18-1 et 18-2 ne sont pas verticales et forment un évasement vers le haut.

Le fond de la caissette, c'est-à-dire la surface sur laquelle la caissette est posée, est constituée de moyens supports 12. Les moyens support 12 sont formés par un ensemble de branches 24 formant un treillis 26. Les extrémités des branches sont reliées au bord 16 de la caissette Le nombre de branches 24, limité, crée des espaces vides E, importants. La surface des branches 24 est très inférieure à la surface entre lesdites branches.

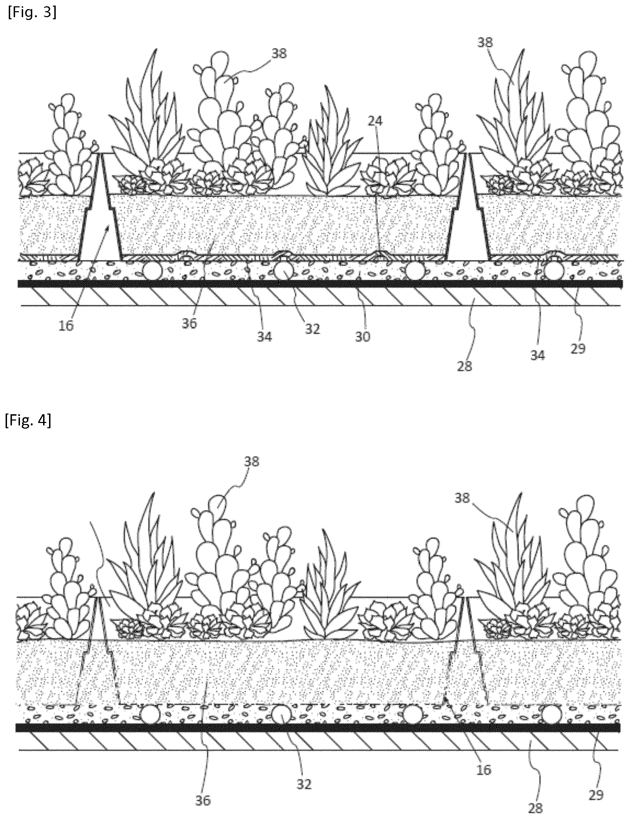

La figure 3 représente une vue en coupe de trois caissettes posées en toiture 28 de bâtiment. Cette toiture comporte généralement une étanchéité 29. Sur cette étanchéité 29, on a représenté un tapis d'irrigation 30. Ledit tapis d'irrigation 30 intègre des tuyaux d'irrigation 32 et se trouve placé entre l'étanchéité 29 de toiture 28 de bâtiment et les moyens structurants 10 de la caissette.

Cette superposition est représentée en coupe transversale sur les figures 3 et 4. Un tapis de rétention 34 est disposé à l'intérieur des caissettes, sur le fond et plus particulièrement sur les branches 24 qui forment le treillis 26. Ce tapis de rétention 34 est apte à recevoir une couche de substrat 36 qui retient les racines du couvert végétal 38. Le tapis de rétention 34 est réalisé dans un matériau fibreux biodégradable. L'ensemble de la caissette est réalisé en un matériau unique biodégradable, notamment en PLA, polycaprolactone ou, de façon préférentielle, en amidon de maïs.

La figure 4 représente une vue en coupe du couvert végétal, constitué du substrat 36 et le couvert végétal 38, tel qu'il a évolué plusieurs mois après la pose des caissettes, représentée sur la figure 3. Le tapis de rétention 34 et les branches 24 du treillis 26 ont disparu.

La mise en œuvre de la présente invention est maintenant décrite. La caissette représentée peut avoir différentes dimensions et a une forme privilégiée carrée, d'environ 50 cm de côté pour favoriser la fabrication, la manutention et la pose. L'évasement des surfaces périphériques 18 formant le bord 16 de la caissette facilite l'empilement des caissettes pour leur stockage et leur transport avant utilisation. Préalablement à la pose, les caissettes vides reçoivent un tapis de rétention 34 sur le treillis 26, puis sont remplies de substrat 36. Le tapis assure dans un premier rôle celui de la rétention mécanique du substrat. Des boutures de couvert végétal comme du sédum, sont ensuite placées dans le substrat 36. Un certain temps est ensuite nécessaire pour que les boutures se développent et poussent. Durant ce même temps, le système racinaire se lie au tapis de rétention 34 qui forme alors un support et une structure pour la couche de végétalisation. Une fois que l'enracinement du couvert végétal dans le tapis est suffisamment développé, les caissettes peuvent être transportées et posées en toiture.

Comme visible sur la figure 3, la pose d'au moins deux caissettes s'effectue sur un tapis d'irrigation 30 intégrant des tuyaux 32, préalablement positionné en toiture 28 ou plus précisément sur l'étanchéité 29 prévue sur la toiture 28 de façon à constituer une végétalisation irriguée. Le tapis d'irrigation 30 intégrant les tuyaux d'irrigation 32 peut idéalement être en fibres végétales biodégradables et de surcroît, le matériau utilisé formant ledit tapis d'irrigation 30 et identique au matériau du tapis de rétention 34. Ainsi, lorsque les caissettes pré cultivées sont positionnées sur le tapis d'irrigation 30, les espaces E formés entre les branches 24 du treillis 26 laisse passer le tapis de rétention 34 qui se déforme sous la pression exercée par le substrat 36 et son couvert végétal. La déformation du tapis de rétention 34 entre les branches 24 et donc au niveau des espaces E, comparable à un affaissement du tapis de rétention 34, favorise le contact dudit tapis de rétention 34 avec le tapis d'irrigation 30.

Dès la pose d'au moins deux caissettes en toiture, les tapis d'irrigation 30 et de rétention 34 sont donc en contact et permettent une meilleure diffusion de l'eau d'irrigation. En effet, l'eau diffusée dans le tapis d'irrigation 30 par les tuyaux d'irrigation 32 remonte aisément dans le tapis de rétention 34 et le substrat 36 et donc dans les racines du couvert végétal 38 par effet capillaire. Le tapis de rétention 34 crée alors une réserve d'eau pour le couvert végétal 38 et une meilleure diffusion sur l'ensemble de sa surface, favorisant ainsi grandement l'irrigation du couvert végétal 38. La végétalisation ainsi recherchée est bien obtenue.

On note que toute sur-irrigation est totalement impossible puisqu'il n'y a pas d'accumulation d'eau de pluie qui s'évacue à travers le substrat, les différentes couches, le surplus en toiture étant évacué de façon connue avec les eaux de pluie et puisque l'effet de capillarité s'éteint dès que les fibres sont gonflées d'eau.

La caissette représentée peut avoir différentes dimensions et a une forme privilégiée carrée, d'environ 50 cm de côté pour favoriser la fabrication, la manutention et la pose. L'évasement des surfaces périphériques 18 formant le bord 16 de la caissette facilite l'empilement des caissettes pour leur stockage et leur transport avant utilisation. Le couvert végétal est préservé mécaniquement, la pose est de qualité, le déplacement en marchant sur les barquettes posées reste possible durant les premiers temps, ceci afin d'éviter d'écraser les plans du couvert végétal. Quant à l'arrosage, il reste parfait et souvent automatisé en quantité, fréquence, voire en apport de nutriments, en fonction des besoins du couvert végétal et des conditions climatiques, souvent très peu mais au moment où cela est nécessaire afin d'éviter la dégradation du fait de la sécheresse.

La qualité d'arrosage par capillarité présente aussi un arrosage en douceur, sans choc thermique, et qui peut être établi même en pleine journée, puisque seul le substrat et les différentes couches restent humides, sachant que la déperdition est aussi très limitée. Le fait de ne pas mouiller le feuillage est aussi un atout en regard du développement des maladies, notamment cryptogamiques

Le matériau constituant la barquette peut aussi contenir des apports nutritifs qui sont libérés au fur et à mesure de la biodégradation.

L'avantage supplémentaire de la caissette est de pouvoir être gerbée pour livraison de caissettes en palette. Dans ce cas, les palettes sont par exemple maintenues entre elles par des cales/entretoises assurant l'immobilisation mutuelle de caissettes entre elles. Ces cales/entretoises sont éventuellement en matériau biodégradable de façon à les laisser sur le chantier, sous les caissettes, sur le substrat des caissettes etc. Ces cales peuvent prendre toute forme géométrique adaptée.

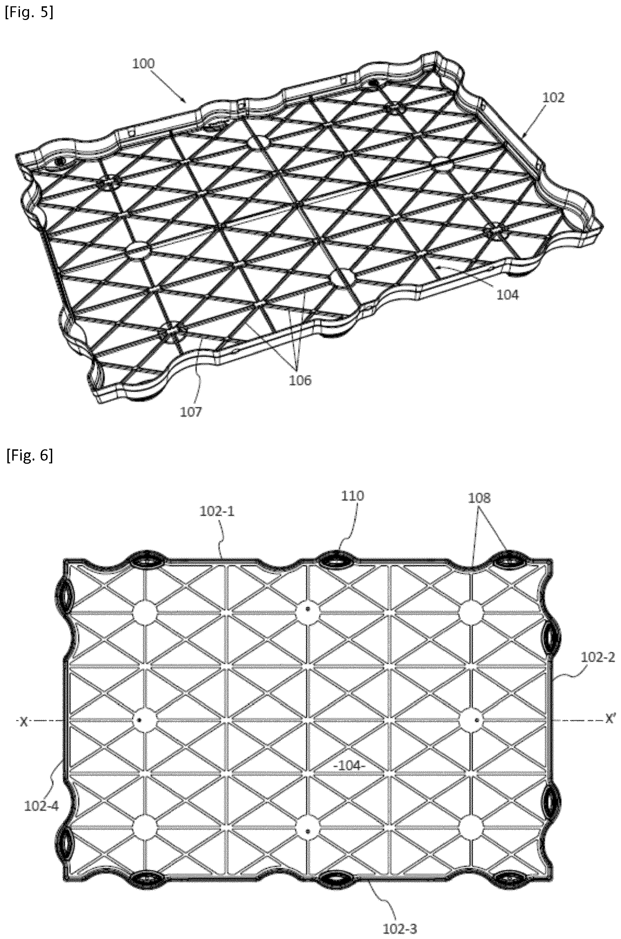

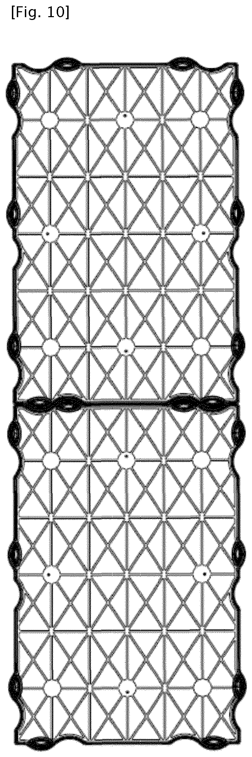

Selon la variante de la caissette de pose à calage de la présente invention qui est maintenant décrite en regard des figures 5 à 10, les références débutent à 100 afin de ne pas porter à confusion avec le mode de réalisation de base décrit ci-avant.

Cette caissette de pose à calage comprend des moyens structurants 100, constitués d'un bord périphérique 102 formant ceinture et d'un fond 104 comportant également un treillis 106 avec des branches 107. Le nombre de branches 107 est limité en laissant des espaces importants comme précédemment. Ceci limite aussi la quantité de matière nécessaire pour réaliser ladite caissette.

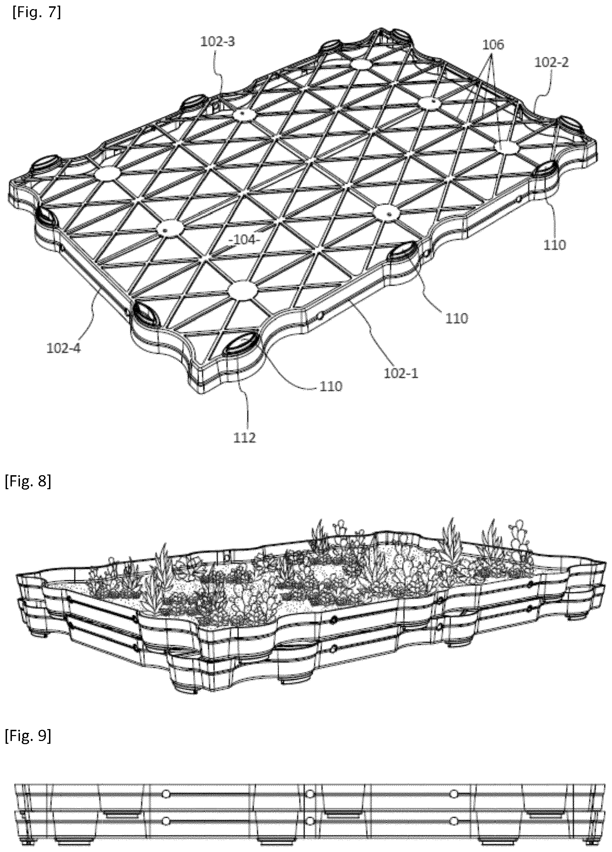

Le bord périphérique 102 comporte des côtés 102-1 à 102-4, en l'occurrence 4 côtés pour une forme rectangulaire, avec chacun des côtés portant au moins deux déformations concave/convexe 108. Les concavités et convexités sont considérées par rapport au bord rectiligne constituant les bords de ladite caissette de pose à calage. Chaque déformation concave/convexe 108 comprend un pied 110 sur la partie convexe, de forme ovale et centrée sur le bord rectiligne. Chaque pied fait saillie par rapport au plan du fond 104, par rapport au treillis 106, comme cela est bien visible sur la figure 7. La disposition des formes convexes, orientées vers l'extérieur tel un bossage, est particulière. Si l'on prend un axe médian longitudinal XX', les pieds 110 des cotés parallèles 102-1 et 102-3 sont disposés de façon parfaitement symétrique. Les pieds 110 des côtés perpendiculaires audit axe XX', 102-2 et 102-4, sont également symétriques par rapport à cet axe XX'. Par contre, les pieds 110 sont alternés sur un côté perpendiculaire par rapport à ceux de l'autre côté perpendiculaire. Ainsi les pieds 110 du premier côté perpendiculaire 110-2 sont rapprochés et les deux pieds 110 du second côté perpendiculaire 110-4 sont éloignés. Chaque pied 110 comporte un décrochement 112 sur sa périphérie de façon à permettre un appui sur la partie supérieure du bord formant ceinture comme il sera expliqué plus avant dans la description. Le bord périphérique 102 comporte selon l'invention, comme pour le mode de réalisation de base décrit ci-avant, un angle de dépouille permettant le retrait du moule de fabrication d'une part et un emboîtement d'autre part lorsque les caissettes de pose à calage sont vides, ceci de façon connue et identique à l'emboîtement du mode de réalisation de base décrit ci-avant. Le matériau utilisé est également du type biodégradable.

La mise en œuvre de cette variante de réalisation permet de cultiver le couvert végétal dans les caissettes directement, tout comme pour la caissette de base. Par contre, lorsque les caissettes de pose à calage sont orientées dans le même sens, les caissettes s'emboîtent parfaitement et offrent un minimum de volume. Ces caissettes sont emboîtées avec des fonds quasiment au contact. On note un premier gain d'épaisseur à l'emboîtement à vide par rapport à la variante de base.

Lorsque les caissettes comportent le couvert végétal, comme montré sur les figures 8 et 9, les caissettes, après une rotation de 180°, alternativement, sont superposées par leur bords avec uniquement les pieds en emboîtement et en calage périphérique. Le fond de la caissette du dessus se trouve alors au-dessus du couvert végétal de la caissette de pose à calage située immédiatement dessous. Aucune pression n'est exercée sur le couvert végétal et les caissettes sont parfaitement gerbées et peuvent supporter des pressions mécaniques suffisantes pour être palettisées, comme les caissettes de pose du mode de réalisation de base.

Les caissettes de pose à calage présentent en outre un avantage, celui du calage comme sa dénomination le laisse supposer. En effet, les caissettes peuvent être posées sur place, en les alignant suivant l'axe XX'. Les parties convexes des bords perpendiculaires 10-2 et 10-4 de deux caissettes successives s'épousent et génèrent une immobilisation en translation, en rotation dans le plan de la caissette, en plus de parfaire l'alignement. Les caissettes de la rangée parallèle sont alignées de façon identique suivant l'axe XX' mais elles sont pivotées à 180° de façon à emboîter les bords 10-1 parallèles à l'axe XX', de chacune des deux rangées juxtaposés. Le calage peut aussi être réalisé avec un décalage d'un pas égal en l'occurrence à 1/3 puisque chaque côté parallèle 102-1 et 102-3 comporte trois déformations concave/convexe 108.

Cette possibilité de montage en quinconce facilite la tenue sur des supports avec une pente, par exemple une toiture en pente. Ces agencements assurent également une excellente tenue vis-à-vis de la prise au vent. Les caissettes sont maintenues mécaniquement.

Cette variante reprend les caractéristiques du mode de réalisation de base et la pose d'un tapis de rétention 134, notamment mécanique. Les autres éléments identiques à la version de base comportent les mêmes références, non nécessairement mentionnées.

Cette variante propose des avantages supplémentaires concernant le stockage à vide des caissettes, le gerbage des caissettes cultivées pour mise en palettes et transport, la manipulation des caissettes cultivées, la mise en place sur chantier et le maintien mécanique durant la première période, avant dégradation programmée liée au matériau, une fois les caissettes mises en place sur le support.

## Revendications

1. Caissette de pose pré cultivée avec un couvert végétal (38) avec des racines dans un substrat (36), pour la végétalisation de toiture (28), qui comprend des moyens structurants (10, 100) constitués d'un bord (16, 102) périphérique, d'un fond constitué de moyens supports (12, 104) étant formés par un ensemble de branches (24,107), reliées au bord (16,102) périphérique de la caissette, constituant un treillis (26,106), le nombre de branches (24,107) étant limité et créant des espaces vides (E) importants et d'un tapis de rétention (34, 114) disposé à l'intérieur de ladite caissette, sur lesdits moyens supports (12, 104), les moyens structurants (10,100) et les moyens de support (12,104) étant réalisés en un matériau biodégradable, **caractérisée en ce que** la caissette comprend un bord périphérique (102) avec un angle de dépouille et comportant des côtés (102-1-102-4), chacun desdits côtés portant au moins deux déformations concave/convexe (108), ces concavités et convexités étant considérées par rapport à la ceinture rectiligne constituant les bords de ladite caissette de pose à calage.

2. Caissette de pose pré cultivée pour la végétalisation de toiture (28), selon la revendication 1, **caractérisée en ce que** chaque déformation concave/convexe (108) comprend un pied (110) sur la partie convexe, de forme ovale et centrée sur le bord rectiligne.

3. Caissette de pose pré cultivée pour la végétalisation de toiture (28), selon la revendication 2, **caractérisée en ce que** chaque pied (110) fait saillie par rapport au plan du fond (104).

4. Caissette de pose pré cultivée pour la végétalisation de toiture (28), selon l'une quelconque des revendications précédentes, **caractérisée en ce que** la couche de substrat (36) retenant les racines du couvert végétal (38) est déposée sur le tapis de rétention (34, 134).

5. Caissette de pose pré cultivée pour la végétalisation de toiture (28), selon l'une quelconque des revendications précédentes, **caractérisée en ce que** le tapis de rétention (34, 134) est réalisé dans un matériau fibreux biodégradable.

6. Végétalisation réalisée à partir de la juxtaposition d'au moins deux caissettes de pose pré cultivée pour la végétalisation de toiture (28), selon l'une quelconque des revendications précédentes, **caractérisée en ce qu'**elle comprend un tapis d'irrigation (30) intégrant des tuyaux (32), préalablement positionné en toiture (28), recevant lesdites au moins deux caissettes.

7. Végétalisation réalisée à partir de la juxtaposition d'au moins deux caissettes de pose pré cultivées pour la végétalisation de toiture (28), selon la revendication 6, **caractérisée en ce que** le tapis d'irrigation (30) est en matériau biodégradable.

## Patentansprüche

1. Einsetzkassette mit vorgezogenen Pflanzen mit einer Pflanzendecke (38) mit Wurzeln in einem Substrat (36) zur Dachbegrünung (28), die Strukturierungsmittel (10, 100) umfasst, bestehend aus einem Umfangsrand (16, 102), einem Boden, bestehend aus Trägermitteln (12, 104), die von einer Gruppe von Verstrebungen (24, 107) gebildet sind, die mit dem Umfangsrand (16, 102) der Kassette verbunden sind, die ein Gitter (26, 106) bilden, wobei die Anzahl der Verstrebungen (24, 107) begrenzt ist und große Leerräume (E) schafft und einer im Inneren der Kassette auf den Trägermitteln (12, 104) angeordneten Rückhaltematte (34, 114), wobei die Strukturierungsmittel (10, 100) und die Trägermittel (12, 104) aus einem biologisch abbaubaren Material hergestellt sind, **dadurch gekennzeichnet, dass** die Kassette einen Umfangsrand (102) mit einem Freiwinkel umfasst und Seiten (102-1-102-4) aufweist, wobei jede der Seiten mindestens zwei konkave/konvexe Verformungen (108) trägt, wobei diese Konkavitäten und Konvexitäten im Verhältnis zu dem geraden Bund betrachtet werden, der die Ränder der eingebetteten Einsetzkassette bildet.

2. Einsetzkassette mit vorgezogenen Pflanzen für die Dachbegrünung (28) nach Anspruch 1, **dadurch gekennzeichnet, dass** jede konkave/konvexe Verformung (108) am konvexen Teil einen oval geformten und am geraden Rand zentrierten Fuß (110) aufweist.

3. Einsetzkassette mit vorgezogenen Pflanzen für die Dachbegrünung (28) nach Anspruch 2, **dadurch gekennzeichnet, dass** jeder Fuß (110) im Verhältnis zur Ebene des Bodens (104) vorsteht.

4. Einsetzkassette mit vorgezogenen Pflanzen für die Dachbegrünung (28) nach einem der vorhergehenden Ansprüche, **dadurch gekennzeichnet, dass** die die Wurzeln der Pflanzendecke (38) haltende Substratschicht (36) auf der Rückhaltematte (34, 134) angeordnet ist.

5. Einsetzkassette mit vorgezogenen Pflanzen für die Dachbegrünung (28) nach einem der vorhergehenden Ansprüche, **dadurch gekennzeichnet, dass** die Rückhaltematte (34, 134) aus einem biologisch abbaubaren Fasermaterial besteht.

6. Begrünung, die durch die Aneinanderreihung von mindestens zwei Einsetzkassetten mit vorgezogenen Pflanzen für die Dachbegrünung (28) durchgeführt wird, nach einem der vorhergehenden Ansprüche, **dadurch gekennzeichnet, dass** sie eine Bewässerungsmatte (30) umfasst, die die zuvor auf dem Dach (28), das die mindestens zwei Kassetten aufnimmt, positionierten Rohre (32) integriert.

7. Begrünung, die durch die Aneinanderreihung von mindestens zwei Einsetzkassetten mit vorgezogenen Pflanzen für Dachbegrünung (28) durchgeführt wird, nach Anspruch 6, **dadurch gekennzeichnet, dass** die Bewässerungsmatte (30) aus biologisch abbaubarem Material besteht.

## Claims

1. Pre-cultivated planting box having a vegetation cover (38) with roots in a substrate (36), for roof (28) greening, which box comprises structuring means (10, 100) consisting of a peripheral edge (16, 102), a bottom consisting of support means (12, 104) formed by a set of arms (24, 107) which are connected to the peripheral edge (16, 102) of the box, constituting a lattice (26, 106), the number of arms (24, 107) being limited and creating large empty spaces (E), and a retention mat (34, 114) arranged inside said box on said support means (12, 104), the structuring means (10, 100) and the support means (12, 104) being made of a biodegradable material, **characterized in that** the box comprises a peripheral edge (102) having a clearance angle and having sides (102-1-102-4), each of said sides bearing at least two concave/convex deformations (108), these concavities and convexities being considered in relation to the rectilinear belt constituting the edges of said wedged planting box.

2. Pre-cultivated planting box for roof (28) greening, according to claim 1, **characterized in that** each concave/convex deformation (108) comprises a foot (110) on the convex portion, which foot is oval and centered on the rectilinear edge.

3. Pre-cultivated planting box for roof (28) greening, according to claim 2, **characterized in that** each foot (110) projects relative to the plane of the bottom (104).

4. Pre-cultivated planting box for roof (28) greening, according to any of the preceding claims, **characterized in that** the substrate layer (36) retaining the roots of the vegetation cover (38) is deposited on the retention mat (34, 134).

5. Pre-cultivated planting box for roof (28) greening, according to any of the preceding claims, **characterized in that** the retention mat (34, 134) is made of a biodegradable fibrous material.

6. Greening achieved by the juxtaposition of at least two pre-cultivated planting boxes for roof (28) greening, according to any of the preceding claims, **characterized in that** it comprises an irrigation mat (30) incorporating pipes (32), the mat being positioned on the roof (28) beforehand and accommodating said at least two boxes.

7. Greening achieved by the juxtaposition of at least two pre-cultivated planting boxes for roof (28) greening, according to claim 6, **characterized in that** the irrigation mat (30) is made of biodegradable material.
